# EUROPEAN PATENT APPLICATION

(11) **EP 4 675 433 A1**
(43) Date of publication of application: **07.01.2026**
(21) Application number: 25187198.4
(22) Date of filing: 03.07.2025
(51) Int. Cl.: G06F 9/50, G06F 16/21

(54) **AUTOMATED MIGRATION BETWEEN SHARED AND DEDICATED CLOUD COMPUTING DATABASE INSTANCES**

(30) Priority: 05.07.2024 US 202418765099
(71) Applicant: SAP SE, 69190 Walldorf (DE)
(72) Inventor: FAHLBUSCH, Jannick Stephan, 69190 Walldorf (DE); GECKELER, Florian, 69190 Walldorf (DE)
(74) Representative: Müller-Boré & Partner Patentanwälte PartG mbB

(57) **Abstract**

The present disclosure provides techniques and solutions for more efficiently managing computing resources used for cloud database instances. Operational data for shared cloud database instances and dedicated database instances can be monitored, including on a continuous basis. The operational data can be compared with one or more thresholds. If the operational data indicates that an entity assigned to a dedicated cloud database instance is underutilizing its assigned resources, it can be migrated to become a tenant of a shared cloud database instance. If the resources of a shared cloud database instance are overutilized, a tenant can be migrated to a dedicated cloud database instance. Migration can include copying data from the original cloud database instance to a migration target cloud database instance. After migration, computing resources can be released that were assigned to the dedicated cloud database instance or to a particular tenant of the shared cloud database instance.

## Description

### FIELD

The present disclosure generally relates to managing cloud computing environments. Particular implementations relate to managing the use of shared and dedicated cloud database instances.

### BACKGROUND

In recent years, the advent of cloud computing has had a major impact in the field of database technologies. Traditional on-premise database systems, while effective, are gradually being overtaken by cloud-based database instances. Unlike their on-premise counterparts, which are hosted locally within an organization's physical infrastructure, cloud database instances reside on remote servers managed by third-party cloud service providers. Often, the relationship between a user of a database, such as a particular company, and cloud computing resources is mediated by a provider of cloud-based database systems. That is, a customer may inform a database company of their requirements, the database company makes arrangements for appropriate cloud resources, and at least a portion of management of cloud infrastructure, as well as the infrastructure itself, is provided by a cloud-services provider.

One of the primary motivations behind the migration to cloud database instances is scalability. Unlike on-premise systems, which often require significant upfront investments in hardware and infrastructure to accommodate future growth, cloud databases provide elastic scalability, allowing organizations to seamlessly adjust their computing resources in response to evolving demands. This inherent scalability not only eliminates the need for costly over-provisioning, but also ensures optimal resource utilization, thereby enhancing operational efficiency and cost-effectiveness.

Cloud databases offer improved accessibility and availability, avoiding limitations imposed by geographical boundaries and physical hardware constraints. By leveraging the distributed nature of cloud computing infrastructure, organizations can access their database instances from anywhere with an internet connection, facilitating seamless collaboration and remote data management. Moreover, cloud service providers typically guarantee high levels of uptime and reliability, minimizing the risk of service disruptions and data loss associated with on-premise systems.

In addition to scalability and accessibility, cloud databases offer a wide array of customizable configurations and deployment options. Customers have the flexibility to tailor their cloud database instances to suit specific performance, security, and compliance requirements, specifying parameters such as the number of processing cores, memory allocation, storage space, and other hardware resources. This granular control allows organizations to optimize their database environment for maximum efficiency and performance, without the burden of procuring, provisioning, or maintaining physical hardware.

Moreover, for customers, cloud databases alleviate the administrative overhead associated with software updates, upgrades, and patch management, relieving them of the responsibility for ensuring the security and integrity of their database systems. Cloud database service providers assume the responsibility for maintaining and updating the underlying software infrastructure, ensuring that customers always have access to the latest features, security enhancements, and performance optimizations without disrupting their operations. This integration of software maintenance and support further enhances the operational efficiency and reliability of cloud database instances, allowing organizations to focus on their core business objectives without being encumbered by infrastructure management tasks.

Despite the benefits offered by cloud databases, issues can arise. For example, organizations may reserve substantially more resources for a database instance than it actually uses, leading to "wasted" computing resources that are reserved for a particular organization that are unused. In some scenarios, such as when an organization has development or testing databases in addition to a production database, a developer may create a database instance, move on to a new project, and forget to remove the database instance. On the other hand, inadequate resource allocation or improper workload management can result in underutilization, diminishing the return on investment and impeding organizational productivity.

Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure provides techniques and solutions for more efficiently managing computing resources used for cloud database instances. Operational data for shared cloud database instances and dedicated database instances can be monitored, including on a continuous basis. The operational data can be compared with one or more thresholds. If the operational data indicates that an entity assigned to a dedicated cloud database instance is underutilizing its assigned resources, it can be migrated to become a tenant of a shared cloud database instance. If the resources of a shared cloud database instance are overutilized, a tenant can be migrated to a dedicated cloud database instance. Migration can include copying data from the original cloud database instance to a migration target cloud database instance. After migration, computing resources can be released that were assigned to the dedicated cloud database instance or to a particular tenant of the shared cloud database instance.

In one aspect, the present disclosure provides a process of migrating a tenant of a shared cloud database instance to a dedicated cloud database instance. A plurality of cloud database instances are concurrently managed. The plurality of cloud database instances include at least one dedicated cloud database instance and at least one shared cloud database instance. The shared cloud database instance includes a plurality of tenants and the dedicated cloud database instance is configured for use by a single entity.

The system receives operational data from the dedicated cloud database instance. The system analyzes the operational data and determines that a utilization threshold has been satisfied, indicating underutilization of computing resources of the dedicated cloud database instance. Based on determining that the utilization threshold has been satisfied, the system migrates the dedicated cloud database instance to form a new tenant of the shared cloud database instance. The migrating includes copying data for the single entity from the dedicated cloud database instance to the shared cloud database instance and allocating resources from a cloud computing system to the new tenant.

The dedicated cloud database instance is removed. The removing of the dedicated cloud database instance includes releasing cloud computing resources previously reserved for the dedicated cloud database instance. The migrating provides more efficient use of the cloud computing resources by allowing underutilized resources to be reallocated.

In another aspect, the present disclosures provides a process of migrating an entity of a shared cloud database instance to a dedicated cloud database instance. A plurality of cloud database instances are concurrently managed. The plurality of cloud database instances include at least one shared cloud database instance, wherein the shared cloud database instance comprises a plurality of tenants.

Operational data from the shared cloud database instance is received. The operational data is analyzed and it is determined that a utilization threshold has been satisfied, indicating overutilization of computing resources of the shared cloud database instance. Based on determining that the utilization threshold has been satisfied, a tenant of the shared cloud database instance is migrated to a dedicated cloud database instance. The dedicated cloud database instance is configured for use by a single entity. The migrating includes copying data for the tenant from the shared cloud database instance to the dedicated cloud database instance and allocating resources from a cloud computing system to the dedicated cloud database instance.

The tenant is removed from the shared cloud database instance. The removing of the tenant comprises releasing cloud computing resources previously reserved for the tenant. The migrating reduces computing resource use at the shared cloud database instance.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram of an example database environment that can be associated with a shared or dedicated cloud database instance, where in a shared cloud database instance at least certain components of the database environment are used by multiple tenants.
FIG. 2 is a diagram illustrating a cloud computing environment in which disclosed techniques can be implemented, including an instance manager that determines when migration should be triggered between shared and dedicated cloud database instances.
FIG. 3A provides a diagram of a cloud computing environment illustrating how an entity associated with an underutilized dedicated cloud database instance can be migrated to a shared cloud database instance, as well as a flowchart of this process.
FIG. 3B provides a diagram of a cloud computing environment illustrating how a tenant associated with an overutilized shared cloud database instance can be migrated to a dedicated cloud database instance, as well as a flowchart of this process.
FIG. 4A is a flowchart of a process of migrating an entity having a dedicated cloud database instance to being a tenant of a shared cloud database instance.
FIG. 4B is a flowchart of a process of migrating a tenant of a shared cloud database instance to a dedicated cloud database instance.
FIG. 5 is a diagram of an example computing system in which some described embodiments can be implemented.
FIG. 6 is an example cloud computing environment that can be used in conjunction with the technologies described herein.

### DETAILED DESCRIPTION

### Example 1 - Overview

In recent years, the advent of cloud computing has had a major impact in the field of database technologies. Traditional on-premise database systems, while effective, are gradually being overtaken by cloud-based database instances. Unlike their on-premise counterparts, which are hosted locally within an organization's physical infrastructure, cloud database instances reside on remote servers managed by third-party cloud service providers. Often, the relationship between a user of a database, such as a particular company, and cloud computing resources is mediated by a provider of cloud-based database systems. That is, a customer may inform a database company of their requirements, the database company makes arrangements for appropriate cloud resources, and at least a portion of management of cloud infrastructure, as well as the infrastructure itself, is provided by a cloud-services provider.

One of the primary motivations behind the migration to cloud database instances is scalability. Unlike on-premise systems, which often require significant upfront investments in hardware and infrastructure to accommodate future growth, cloud databases provide elastic scalability, allowing organizations to seamlessly adjust their computing resources in response to evolving demands. This inherent scalability not only eliminates the need for costly over-provisioning, but also ensures optimal resource utilization, thereby enhancing operational efficiency and cost-effectiveness.

Cloud databases offer improved accessibility and availability, avoiding limitations imposed by geographical boundaries and physical hardware constraints. By leveraging the distributed nature of cloud computing infrastructure, organizations can access their database instances from anywhere with an internet connection, facilitating seamless collaboration and remote data management. Moreover, cloud service providers typically guarantee high levels of uptime and reliability, minimizing the risk of service disruptions and data loss associated with on-premise systems.

In addition to scalability and accessibility, cloud databases offer a wide array of customizable configurations and deployment options. Customers have the flexibility to tailor their cloud database instances to suit specific performance, security, and compliance requirements, specifying parameters such as the number of processing cores, memory allocation, storage space, and other hardware resources. This granular control allows organizations to optimize their database environment for maximum efficiency and performance, without the burden of procuring, provisioning, or maintaining physical hardware.

Moreover, for customers, cloud databases alleviate the administrative overhead associated with software updates, upgrades, and patch management, relieving them of the responsibility for ensuring the security and integrity of their database systems. Cloud database service providers assume the responsibility for maintaining and updating the underlying software infrastructure, ensuring that customers always have access to the latest features, security enhancements, and performance optimizations without disrupting their operations. This integration of software maintenance and support further enhances the operational efficiency and reliability of cloud database instances, allowing organizations to focus on their core business objectives without being encumbered by infrastructure management tasks.

Despite the benefits offered by cloud databases, issues can arise. For example, organizations may reserve substantially more resources for a database instance than it actually uses, leading to "wasted" computing resources that are reserved for a particular organization that are unused. In some scenarios, such as when an organization has development or testing databases in addition to a production database, a developer may create a database instance, move on to a new project, and forget to remove the database instance. On the other hand, inadequate resource allocation or improper workload management can result in underutilization, diminishing the return on investment and impeding organizational productivity.

Accordingly, room for improvement exists.

As discussed, in some cases a customer specifically requests a dedicated (which can also be referred to as independent) cloud database instance with specific hardware resources. In other cases, a customer specifies particular hardware resources to be provided, but without specifying whether the instance must be dedicated. In further scenarios, a customer may request certain performance/service level guarantees, but does not specify particular hardware to be used in meeting these guarantees.

When a dedicated instance is not specified, customers can be placed on a shared database instance, which can also be referred to as a multitenant database system. In other scenarios according to the present disclosure, a default behavior is to place a customer in a dedicated database instance, and then migrate them to a shared database instance if their resource use fails to satisfy a threshold. Multitenant database systems are becoming increasingly common, particularly in cloud deployments. Multitenant environments can provide a number of advantages, including reducing hardware and maintenance costs for users (tenants). In a multitenant environment, some resources, such as documentation, a centralized code base, and at least certain runtime and configuration data, are typically shared by multiple tenants. Other tenant resources (e.g., data) can be maintained in the same database instance, but separated from other tenants, such that a given tenant cannot access the data of another tenant.

While multitenant systems can have different tenants that are associated with different customers, multitenant systems may be set up for a single customer. For instance, a large organization may have multiple systems (e.g., development, test, and production systems). At least a portion of these systems, also referred to as entities, can be configured as tenants of a shared database instance. Similarly, a large organization may maintain common resources, but have distinct resources for particular regions, operating units, facilities, etc., which can be similar to tenants in a multitenant architecture. Other systems may be assigned to a dedicated database instance.

The present disclosure provides techniques for migrating customer systems, either of a single customer or of multiple customers, between dedicated cloud database instances and shared cloud database instances. Criteria can be defined for when a dedicated cloud database instance should be moved into a shared database instance. Similarly, criteria can be defined for when a tenant in a shared database instance should be implemented instead as a dedicated database instance. Disclosed techniques also provide for moving tenants between shared database instances.

The disclosed techniques can have a variety of advantages. Dedicated cloud database instances can be moved to shared database instances if computing resources associated with the dedicated cloud database instance are not being adequately utilized. So, for example, if a customer requests a dedicated instance with a particular number of CPU cores, and the CPU cores are not being adequately utilized, the dedicated instance can be migrated to a shared instance. The resources that were previously reserved can be released for other users, thus maximizing resource use.

Similarly, disclosed techniques can migrate tenants in a shared cloud database instance if the resources of the shared cloud database instance are overutilized. A tenant can be migrated to a dedicated instance in some scenarios, or to another shared instance in others. The decision to move a tenant to a dedicated database instance or a different shared database instance can be based on an analysis of the resource use of the particular tenant. For example, if the tenant has high resource use, this may indicate that the tenant should be moved to a dedicated instance, as moving the tenant to another shared instance may just cause that shared instance to become overloaded. Conversely, a tenant may not be using an excessive amount of resource; it may be that the shared database instance simply has too many tenants. In these situations, resource use can be used more efficiently by moving a tenant to a different shared cloud database instance with more available computing resources.

In some cases, migration can be carried out in response to utilization spikes or utilization troughs. However, data from the instances can be continuously monitored and migration automatically performed, minimizing negative impacts from resource overutilization, in the case of a workload spike, or promptly releasing unneeded resources in the case of a utilization trough. In other cases, migration can be carried out in advance of a spike or a trough. For example, thresholds can be defined, or historical analysis or machine learning techniques used, to identify when a spike or trough is likely to occur, and migrations can be made in anticipation of such events.

Another advantage of disclosed techniques is that migration can be transparent to clients. That is, a client can be provided with an endpoint for a database, and can continue using that endpoint regardless of the type of database instance used for their data and operations. If the new instance's endpoint differs from that initially provided to the client, proxy or forwarding techniques can be used to route client requests to the original endpoint to the new endpoint, reducing client disruption.

The present disclosure proceeds with comparatively simple examples to illustrate the principles of the disclosed techniques, such as diagrams and descriptions involving a single shared cloud database instance and a single dedicated cloud database instance. In practical implementations, disclosed techniques can be used to concurrently manage hundreds or even thousands of database instances/database instance tenants. Thus, the disclosed techniques cannot be performed manually by a human. Further, the automatic monitoring and migration of the disclosed techniques can avoid or minimize utilization issues more effectively than manual implementation. In some cases, performance metrics are evaluated on a real time or near real time basis, such as evaluating them at a time period of 15 minutes or less, which can include evaluation at a time period of 10 minutes or less, 5 minutes or less, or 1 minute or less.

### Example 2 - Example Database Environment

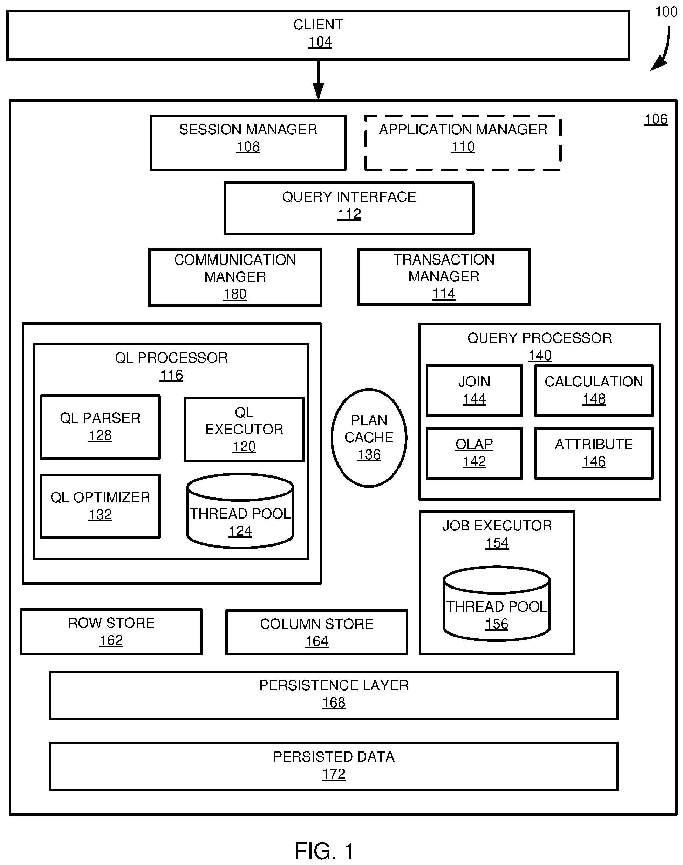

FIG. 1 illustrates an example database environment 100. The database environment 100 can be used in implementations of dedicated database instances and in implementations of shared database instances. The database environment 100 provides example components that can be shared in a shared database instance. By sharing these components, computing resource use can be reduced. For example, in some scenarios, implementing features of the database environment can consume around ten percent of computing resources assigned to an instance.

FIG. 1 illustrates a client 104 communicating with a database server 106. While a single client 104 is depicted, the client 104 may represent multiple clients, including OLAP clients, OLTP clients, or a combination thereof, depending on the deployment scenario. In particular, in a shared database instance, the client 104 can represent a particular tenant, where multiple tenants access the database server 106. Here, "client" 204 refers to a software application/user that makes a connection to the database server rather than referring to client in the sense of a customer/entity. That is, a customer may have dozens, hundreds, or even thousands of users, clients 104, accessing a database server 106.

The client 104 establishes communication with the database server 106 to initiate database operations. In a dedicated instance, a single customer/entity exclusively uses the resources and services of the database server 106. In contrast, in a shared instance, clients 104 of multiple customers/entities share the resources and services of the database server 106.

A session manager component 108 facilitates communications with the client 104, managing connections between the client and the database server 106. It can support various database programming interfaces, such as Java Database Connectivity (JDBC), Open Database Connectivity (ODBC), or Database Shared Library (DBSL), to ensure compatibility with different client applications. Typically, the session manager 108 can simultaneously manage connections with multiple clients 104, but in shared instances, it typically also enforces session isolation and resource allocation policies differently, to maintain tenant separation and "fairness" (such as in terms of allocation of computing resources or access to components of the database server 106). The session manager 108 carries out functions such as creating a new session for a client request, assigning a client request to an existing session, and authenticating access to the database server 106. For each session, the session manager 108 maintains a context storing a set of parameters related to the session, such as settings related to committing database transactions or the transaction isolation level (such as statement level isolation or transaction level isolation).

For other types of clients 104, such as web-based clients (such as a client using the HTTP protocol or a similar transport protocol), the client can interface with an application manager component 110. Although shown as a component of the database server 106, in other implementations, the application manager 110 can be located outside of, but in communication with, the database server 106. The application manager 110 can initiate new database sessions with the database server 106 and carry out other functions, in a similar manner as the session manager 108.

In a dedicated instance, the application manager 110 primarily focuses on managing database sessions for a single system or entity, for a single customer. In a shared instance, the application manager 110 accommodates multiple tenants, dynamically allocating resources and balancing workload to maintain performance and fairness across tenants.

The application manager 110 can determine the type of application making a request for a database operation and mediate execution of the request at the database server 106, such as by invoking or executing procedure calls, generating query language statements, or converting data between formats usable by the client 104 and the database server 106. In particular examples, the application manager 110 receives requests for database operations from a client 104, but does not store information, such as state information, related to the requests.

Within a dedicated instance, the application manager 110 operates with respect to the specific requirements of a single entity of a given customer, optimizing database interactions accordingly. In a shared instance, the application manager 110 manages a diverse range of applications from multiple tenants, implementing resource allocation policies and performance optimizations to ensure equitable access to database resources.

Once a connection is established between the client 104 and the database server 106, including when established through the application manager 110, execution of client requests is typically carried out using a query language, such as the structured query language (SQL).

In a dedicated instance, a query interface 112 operates for a signle dedicated customer entity, creating connections with execution components optimized for the entity's workload. It also manages query optimization and caching strategies tailored to the entity's application. In a shared instance, the query interface 112 serves multiple tenants, managing resource allocation and optimization strategies that balance the workloads of different tenants/customer entities. The query interface 112 can also manage cache contention and query prioritization to provide fair access to database resources among competing queries.

Certain types of requests for database operations, such as statements in a query language to write data or manipulate data, can be associated with a transaction context. In at least some implementations, each new session can be assigned to a transaction.

In a dedicated instance, a transaction manager component 114 focuses on managing transactions within the scope of an application for a single entity, ensuring data consistency and integrity specific to that entity's operations. This involves coordinating transactions, managing isolation levels, and overseeing commit or rollback processes tailored to the entity's requirements. In contrast, in a shared instance, the transaction manager 114 handles transactions across multiple tenants, implementing mechanisms to isolate and protect each tenant's data while efficiently managing shared resources. This includes coordinating transactions, managing isolation levels, and resolving conflicts to maintain data integrity in a multitenant environment.

The query interface 112 in a dedicated instance communicates directly with a query language processor 116 tailored to the specific requirements of the entity's workload. For instance, it forwards query language statements or other database operation requests from the client 104 to the query language processor 116, which includes a query language executor 120, such as a SQL executor, along with a dedicated thread pool 124 optimized for the entity's workload.

In a shared instance, the query interface 112 serves multiple tenants. While the query interface 112 still communicates with a query language processor 116, the query language processor handles queries from various tenants, balancing resource allocation and optimization strategies to meet the diverse needs of different tenants. Some requests for database operations may be executed directly by the query language processor 116, while others, particularly those requiring transaction control, may be forwarded to another component of the database server 106, such as the transaction manager 114, for handling. In at least some cases, the query language processor 116 is responsible for carrying out operations that manipulate data (e.g., SELECT, UPDATE, DELETE).

In both dedicated and shared instances, the query interface 112 and session manager 108 maintain and manage context information associated with requests for database operations. However, in a shared instance, the query interface 112 also manages context information for requests received through the application manager 110, ensuring fair access to database resources among multiple entities.

In a dedicated database instance, when a connection is established between a client 104 of an entity and the database server 106 by the session manager 108 or the application manager 110, a client request, such as a query, is assigned to a thread of the dedicated thread pool 124. Each thread in the pool can be optimized for the specific workload of the entity, ensuring efficient execution of processing activities. For example, higher priority workloads may be assigned to threads that are prioritized for execution - receiving more processing resources than threads assigned to lower priority workloads. These threads can be managed directly by the operating system of the database server 106 or in combination with another component of the server. Typically, the thread pool 124 contains multiple threads to handle concurrent requests, and the number of threads can be dynamically adjusted based on the workload of the dedicated instance.

In a shared instance, however, the thread pool 124 is used for operations on behalf of multiple tenants. While the number of threads may still be dynamically adjusted, the adjustment balances the processing requirements of different tenants sharing the instance. Additionally, each thread of the shared thread pool 124 may be assigned to handle requests from multiple sessions belonging to different tenants, optimizing resource utilization across the shared environment.

When a query is received in a dedicated instance, the session manager 108 or the application manager 110 determines whether an execution plan for the query already exists, typically stored in a dedicated plan cache 136. If a cached execution plan is available, it is retrieved and forwarded to the query language executor 120 for processing.

In a shared instance, the plan cache 136 balances the storage and retrieval of execution plans for various tenants sharing the instance. The query interface 112, in coordination with the session manager 108 or application manager 110, determines the appropriate thread from the shared thread pool 124 to handle the query, ensuring fair and efficient utilization of shared resources.

In a dedicated database instance, if a query is not associated with an existing execution plan, it undergoes parsing using a dedicated query language parser 128. The query language parser 128 verifies the syntax and validity of the query language statements, ensuring compliance with the database schema and constraints specific to the entity's environment within the dedicated instance. For instance, the parser 128 checks the existence of tables and records referenced in the query against the schema defined in the database server 106. In a shared instance, the query language parser 128 manages the diverse schemas and constraints of multiple tenants.

Following parsing, in a dedicated instance, the query undergoes optimization using a dedicated query language optimizer 132. The query language optimizer 132 creates a query execution plan, using strategies such as query unnesting and optimizing execution order to enhance efficiency. The resulting optimized execution plan is then cached in the dedicated plan cache 136 for future use, ensuring rapid retrieval and execution of similar queries.

In a shared instance, the query language optimizer 132 balances the optimization needs of multiple tenants sharing the instance. While the query optimizer 132 still performs operations to enhance query performance, it does so while considering the diverse workloads and resource utilization patterns of all tenants. The optimized execution plan, if cached, is managed along with cached plans for other tenants.

In caching and executing query plans in a shared instance, resource allocation mechanisms can be used to prioritize critical workloads while preventing any single tenant from monopolizing system resources, ensuring equitable access to computing resources for all tenants.

The cached execution plans are isolated to prevent unauthorized access or interference from one tenant to another. Security measures are implemented to ensure that tenants can only access their own cached plans and data, maintaining data privacy and confidentiality within the shared environment.

To accommodate varying workload characteristics and performance requirements, the caching mechanism may offer customization options for individual tenants. This can include configurable caching policies or priority settings that allow tenants to specify caching preferences based on their specific application needs and performance objectives.

Once a query execution plan has been generated or received, the query language executor 120 can oversee its execution. For example, the query language executor 120 can invoke appropriate subcomponents of the database server 106. In a dedicated instance, this execution process is tailored to the specific workload and requirements of a single entity, while in a shared instance, the query language executor 120 adapts its execution strategy to accommodate the diverse needs of multiple tenants. This can involve dynamically allocating resources and balancing workload across tenants to maintain performance and fairness in a shared environment.

In executing the query, the query language executor 120 can call a query processor 140, which can include one or more query processing engines. The query processing engines can include, for example, an OLAP engine 142, a join engine 144, an attribute engine 146, or a calculation engine 148. In a dedicated instance, each of these engines is optimized for the specific workload and requirements of a single entity, while in a shared instance, these engines adapt to the needs of multiple tenants. While the OLAP engine 142 continues to optimize execution plans for OLAP queries, the join engine 144 manages relational operations for various single entities or multiple tenants, and the attribute engine 146 handles column data structures and access operations for different a single entity or multiple tenants.

In certain situations, such as if the query involves complex or internally parallelized operations or sub-operations, the query executor 120 can send operations or sub-operations of the query to a job executor component 154, which can include a thread pool 156. An execution plan for the query can include a plurality of plan operators. Each job execution thread of the job execution thread pool 156, in a particular implementation, can be assigned to an individual plan operator. The job executor component 154 can be used to execute at least a portion of the operators of the query in parallel.

In a dedicated instance, this parallelization strategy is tailored to the specific workload of a single entity, while in a shared instance, the job executor component 154 manages parallelized operations across multiple tenants, balancing resource allocation and optimization strategies. Each job execution thread within the thread pool 156 can be assigned to an individual plan operator, allowing for concurrent processing of query components across operations for a single entity or for multiple tenants. This parallelization approach enhances query execution speed, albeit potentially increasing the computational load on one or more processing units of the database server 106.

The query processing engines of the query processor 140 can access data stored in the database server 106. In a dedicated instance, these engines operate within the context of the entity's specific data storage format, whether it be row-wise or column-wise, stored respectively in the row store 162 or the column store 164. In at least some cases, data can be transformed between a row-wise format and a column-wise format. A particular operation carried out by the query processor 140 may access or manipulate data in the row store 162, the column store 164, or, at least for certain types of operations (such a join, merge, and subquery), both the row store 162 and the column store 164.

In a shared instance, the query processing engines adapt to access data across multiple tenants, which may be stored in different formats and locations within the database server 106.

A persistence layer 168 can be in communication with the row store 162 and the column store 164. In a dedicated instance, this layer manages data persistence and integrity for a single entity, while in a shared instance, the persistence layer 168 handles data persistence across multiple tenants, implementing mechanisms to isolate and protect each tenant's data while efficiently managing shared resources. The persistence layer 168 can perform operations such as committing write transactions, storing redo log entries, rolling back transactions, and periodically writing data to storage to provide persisted data 172, where in a shared instance this is implemented in a manner that maintains data integrity and consistency across the shared environment.

In executing a request for a database operation, such as a query or a transaction, the database server 106 may need to access information stored at another location, such as another database server. A communication manager 180 component facilitates such communications within the context of operations for a single entity or on behalf of multiple tenants. The communication manager 180 mediating interactions between the database server 106, other database servers, a single entity or multiple tenants, or the application manager 110, particularly when the application manager 110 is located outside of the database server. In the case of a shared instance, the communication manager 180 uses communication channels that maintain data isolation and integrity among multiple tenants in the shared environment.

The database server 106 may operate independently or as part of a distributed database system, both for dedicated instances and shared instances. Within a distributed database system, multiple database servers 106 collaborate to manage and store data across different nodes. At least a portion of these database servers may share some or all of the components of the database server 106.

The nature of a distributed database system allows for various data replication and distribution strategies to optimize performance and reliability. For instance, tables may be replicated across multiple database servers to ensure redundancy and fault tolerance. Additionally, data may be distributed between multiple servers to distribute the workload and enhance scalability. For example, one database server may hold a copy of a specific table, while another server holds a different table, ensuring efficient data access and management across the distributed environment. Furthermore, data may be partitioned between database servers, with each server responsible for managing a specific portion of the data, further enhancing performance and scalability.

In the execution of database operations, the database server 106 may need to access other database servers or external information sources to fulfill client requests effectively. The communication manager 180 can mediate these communications, serving as a centralized hub for routing requests and managing replies between components of the database server 106 or other database servers within the distributed system. By orchestrating communication between distributed components, the communication manager 180 ensures seamless data exchange and coordination.

### Example 3 - Example Cloud Computing Environment with Shared and Dedicated Cloud Database Instances

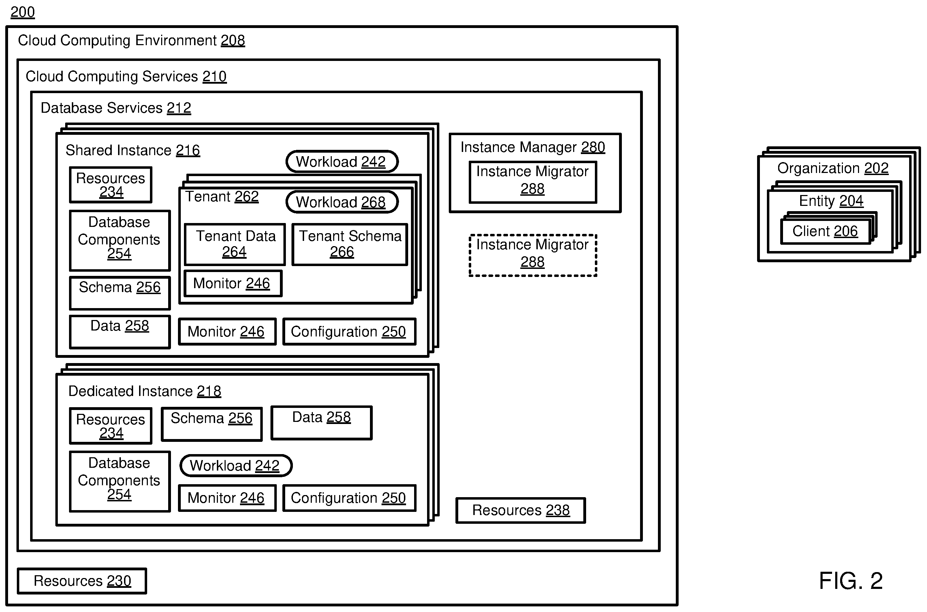

FIG. 2 illustrates an example computing environment 200 in which disclosed techniques can be implemented. The computing environment 200 includes one or more organizations 202 that each can have one or more entities 204 (which can correspond to, for example, development, test, and production systems, systems for different geographical regions, etc.), that each have one or more clients 206 that interact with a cloud computing environment 208. The cloud computing environment 208 provides one or more cloud computing services 210, including database services 212.

The database services 212 host one or more database instances, including one more shared (multitenant) database instances 216 and one or more dedicated database instances 218. As used herein, a dedicated database instance 218 refers to a database instance that is configured for use by a single "entity" 204 of an organization 202, where a given organization can have multiple entities or a single entity. A dedicated database instance 218 is one that is not configured for multitenancy. As an example, an organization 202 can refer to a particular company or organization, who have may have multiple database instances. For example, a client 204 can have a development database instance, a testing database instance, and a production database instance, where these different instances can be associated with distinct entities 204 of a client. Thus, for example, a shared database instance 216 could host each entity 204 of the organization 202 as separate tenants 262 of a shared database instance 216, or a given entity could be assigned to a dedicated database instance 218.

As an example of how it may be useful to assign some entities 204 to a shared database instance 216 and others to a dedicated database instance 218, consider that typically development and test entities typically require fewer computing resources than the entity corresponding to the production database. In some implementations, the development and test systems/entities 204 can be placed in one or more shared instances 216 as tenants 262. That is, both the development and test database entities 204 could be placed in the same shared instance 216, or the development entity can be placed in one shared instance and the test entity can be placed in a different shared instance. As the production entity 204 may require substantially more computing resources, in at least some implementations it can be deployed to a dedicated cloud database instance 218.

Note that the above scenario is one illustration of how techniques of the present disclosure can be used with database instances of multiple different organizations 202, but where the techniques can be useful for scenarios involving a single organization. Some organizations 202, such as government organizations, or some companies, may have strict security/privacy requirements that may, for example, not allow them to be placed on a shared cloud database instance 216 with other organizations, even with the data separation guarantees of multitenancy. However, as the above example illustrates, a single organization 202 can have multiple entities 204, and so those entities can be deployed to shared database instances 216, and moved between them and dedicated database instances 218, using disclosed techniques to make more efficient use of computing resources. In addition to having separate database entities 204 for development, test, and production, a given organization 202 can have multiple entities for other reasons, such as having different database systems for different software applications, for different business units, for different processing types (for example, machine learning versus analytical analysis versus business transactions), based on geographic location, for performance isolation, or for regulatory compliance.

Typically, a cloud service provider provides the cloud computing environment 208, or at least particular cloud computing services 210. A software company may provide the database services 212, and may establish the cloud computing environment 200 with another company. For example, SAP HANA CLOUD can be used with cloud computing solutions such as AMAZON WEB SERVICES or MICROSOFT AZURE. One or more cloud service providers can thus provide computing resources 230 of the cloud computing environment 208.

The database instances 216, 218 are assigned a portion 234 of the computing resources 230 of the cloud computing environment 208 dedicated to the database services 212 (resources 238). For example, the resources 234 can be an amount of processing resources, memory resources (such as RAM), and storage resources (for example, disk space). In particular implementations, one or both of shared database instances 216 or dedicated database instances 218 can be assigned a level of computing resources, such as in terms of a maximum amount of resources that can be used and a minimum amount of resources to be allocated to a database instance. The cloud computing infrastructure can manage computing resources within that range.

The database instances 216, 218 process respective workloads 242. A workload 242 can include operations to read, write, or modify data, as well as operations to create, modify, or delete database objects, to perform database maintenance operations (such as a backup operation), to perform actions that can be useful in improving database performance, such as generating prepared statements, generating indices, or partitioning data, among other operations. Database operations can include calculations, such as calculating various types of aggregates or determining minimum or maximum values.

The database instances 216, 218 can include one or more monitoring components 246 that can monitor processing of the workload 242 by a database instance, or other operational aspects of a database instance. The information that can be monitored can include amounts of computing resources used (such as memory, processors, network resources, or persistent storage), a number of statements or queries processed, information about processing times, or information about a volume of data processed or computing resources used in processing data. A monitoring component 246 can record information such as resource use by a database instance 216, 218 or information about its workload 242, which can include, along with resource use, information about numbers and types of operations in the workload, a number of operations in the workload, or performance metrics in executing the workload, such as how long operations took to complete, cache sizes, or information about a number of concurrent operations or the size of an operation queue.

A given database instance 216, 218 can be associated with configuration information 250. Configuration information 250 can include information about database software used by the database instance, including version information, or dates when a database instance was last updated. Configuration information 250 can also include information such an organization 202 or an entity 204 associated with a database instance 216, 218 or information that describes a software application, use case, or industry of an organization or entity.

In a dedicated database instance 218, the database instance includes database components 254, which can correspond to components of the database server 106 of FIG. 1, including an application server. The dedicated database instance 218 can also include a schema 256 that defines storage structures for the database and their relationships, such as definitions of tables and views. Data 258 is stored in association with the schema 256, and can be accessed by the database components 254.

A shared database instance 216 includes database components 254, where at least a portion of the database components 254 are shared by the tenants 262. A shared database instance 216 can also include a schema 256 that is shared by multiple tenants 262, and can include shared data 258. In addition, a tenant 262 can include a tenant specific schema 266 and tenant specific data 264, which are not shared with other tenants. A given tenant 262 is associated with its own workload 268, which contributes to the overall workload 242 of the shared instance 216. In addition to the monitoring of the overall shared database instance by a monitoring component 242, each tenant, in some implementations, can also have a monitoring component.

Information regarding the database instances 216, 218, such as information from the monitoring components 246 or the configuration information 250 can be retrieved by, or provided to, a database instance manager 280. The database instance manager 280 is responsible for monitoring the database instances 216, 218 and taking actions such making a determination that a tenant 262 of a shared database instance 216 should be moved to a dedicated database instance 218, making a determination that a tenant should be moved between shared database instances, or making a determination that an entity 204 should be moved from a dedicated database instance to being a tenant 262 of a shared database instance. As part of the managing, the database instance manager 280 can associate database instances of the database services 212 with identifiers indicating whether a given database instance is a shared database instance 216 or a dedicated database instance 218. This information can also be maintained by the database instances 216, 218 themselves, such as part of the configuration information 250.

The database instance manager 280 can include an instance migrator 288. That is, once the database instance manager 280 determines that a change to a cloud database instance 216, 218 should be made, the instance migrator 288 is responsible for actions such as triggering, performing, or coordinating operations to effectuate the change. While shown as part of the instance manager 280, in some cases the instance migrator 288 can be a separate component of the cloud computing environment 208, as indicated by the second instance manager in FIG. 2 (shown in dashed lines).

In determining whether to trigger a migration for an entity 204, the instance manager 280 can consider a variety of information about the entity 204 and the instances 216, 218, including as previously described. Again, the resources can include computer resource use using resource utilization metrics such as CPU utilization, memory usage, storage utilization, and network bandwidth. Monitoring CPU usage helps ensure adequate processing resources are available and identifies potential resource contention issues. Memory consumption tracking prevents memory exhaustion and optimizes memory allocation. Disk space usage monitoring prevents storage shortages and ensures sufficient capacity for data storage and processing. Network traffic and bandwidth usage are monitored to ensure optimal network performance and prevent congestion.

Workload activity metrics can be used as part of an evaluation as to whether a transfer should be made, where the workload activity metrics can be used with, or in place of, the resource utilization metrics. Again, workload activity metrics include information such as tracking the number of database operations, such as queries, transactions, inserts, updates, and deletes, to gauge workload intensity and identify activity spikes. Measuring throughput provides insight into the rate of database operations processed per unit of time, reflecting workload performance and efficiency. Monitoring latency assesses system responsiveness and identifies potential bottlenecks or performance issues.

Analyzing the distribution of database operations by type (e.g., read, write, query) helps understand workload characteristics and resource requirements. Tracking the number of active client connections and monitoring the volume and types of client requests received by the database server provide insights into user demand, concurrency levels, and application usage patterns.

Additionally, overall system health can be monitored, including server uptime, database availability, and error rates. System metrics, such as system load averages, disk I/O operations per second (IOPS), and database cache hit ratios, can help assess system performance and identify potential areas for optimization. Furthermore, monitoring security-related metrics such as authentication attempts, authorization failures, and data access patterns helps ensure data confidentiality, integrity, and compliance with regulatory requirements.

When determining whether to perform migration with respect to a database instance 216, 218 and an entity 204, a range of rule types and strategies can be employed to facilitate automated decision-making processes tailored to specific performance objectives and operational requirements. Individual metric thresholds can be established to trigger migration actions based on predefined levels of resource utilization, workload activity, or system health indicators. For example, CPU utilization exceeding a certain threshold for a sustained period may signal the need for migration to alleviate resource congestion and maintain optimal performance. Similarly, thresholds for metrics such as memory usage, storage capacity, network bandwidth, and database operation rates can be defined to govern migration decisions in response to varying workload demands and resource availability.

A number of tenants 262 in a shared database instance 216 can influence a decision as to whether to migrate a tenant to a dedicated database instance 218. There can be "hard" limits for a number of tenants 262 in a shared database instance 216, for example. As a number of tenants 262 of a shared database instance 216 increases, such as approaching a particular limit, rules can be adjusted to allow tenants to be moved to dedicated instances 218 more aggressively, such as lowering thresholds for resource use or workload metrics as the number of tenants increases.

In addition to individual metric thresholds, combinations of metrics can be used. By considering multiple metrics simultaneously, such as CPU utilization, memory usage, and database operation rates, migration rules can be designed to account for complex interactions and dependencies between different aspects of system performance. For instance, a rule may prioritize migration actions when CPU utilization exceeds a certain threshold concurrently with a spike in database operation rates, indicating potential performance bottlenecks.

Furthermore, weighting or prioritizing certain metrics over others can be employed to reflect their relative importance in decision-making processes. By assigning higher weights to metrics such as CPU utilization and database operation rates, migration rules can be configured to prioritize actions that address imminent performance issues or mitigate risks of resource exhaustion. Conversely, less critical metrics may be assigned lower weights or used as supplementary criteria to validate migration decisions.

Moreover, advanced techniques such as machine learning can be leveraged to develop predictive models that anticipate the need for tenant migration based on historical data patterns and predictive analytics. By analyzing historical performance data and identifying correlations between various metrics and migration outcomes, machine learning algorithms can generate predictive models capable of forecasting future resource demands and workload fluctuations. These predictive models can then be integrated into migration decision-making processes to enable proactive and adaptive management of database instances.

In a similar manner, the instance manager 280 can use historical analysis in determining when/whether to migrate an entity 204 between cloud database instance 216, 218. As an example, a production database instance may have a significantly higher workload at particular time periods, such as at the end of fiscal quarters where more reporting functions are performed. The instance manager 280 can include logic to track these workload spikes and proactively migrate a tenant 262 to a dedicated database instance 218 prior to a workload spike, and then migrate the associated entity 204 back to being a tenant of a shared database instance 216 after the workload spike.

In the context of migrating a tenant 204 (including as a tenant 262 of a shared database instance 216) between database instances in a multitenant environment, the instance migrator 288 can perform a variety of operations in making/facilitating the transfer. The instance migrator 288 can directly include this functionality, or the functionality may be provided by other components of the computing environment 200, which are called ortriggered by the instance migrator. In the present disclosure, for simplicity, statements about the instance migrator 288 "performing" some functionality can include scenarios where the instance migrator directly performs the functionality or scenarios where the instance migrator calls another component to cause execution of such functionality. For example, migrating data between instances 216, 218 can be carried out using existing ETL (extract, transform, load) or similar tools. Rather than replicating this functionality, the instance migrator 288 can call such an existing tool in response to a migration decision by the instance manager 280.

One such function of the instance migrator 288 involves managing resources at the destination instance 216, 218, as well as at the original instance. For example, when an entity 204 is moved to a new instance, which could be a new shared instance 216 or a new dedicated instance 218, resources are provisioned for the instance. If an entity 204 is moved to an existing shared instance 216, the instance migrator 288 can ensure that the resources of the shared instance are sufficiently "scaled up" to accommodate the new tenant 262. In some cases, resources to be provisioned or reserved can be based on factors like a default policy, or can include considering factors such as the resource use/workload characteristics of the entity 204 being moved. In some cases, the instance migrator 288 can perform (including by triggering) the release of resources, such as when a dedicated instance 218 is removed after migration of the associated entity 204 to a shared instance 216, or when a tenant 262 of a shared instance 216 is moved to another shared instance or to a dedicated instance.

The instance migrator 288 can select and evaluate techniques to be used during migration. For example, the instance migrator 288 can select techniques based on criteria like data volume, downtime tolerance, and environment compatibility. Rules can be defined that select between offline and online methods automatically based on the evaluation. Offline strategies involve pausing operations for data transfer (i.e., system downtime), while online methods provide continuous operation of the source database instance during migration with data synchronization to ensure that the new instance receives data updates made during migration.

The instance migrator 288 can include automated algorithms that identify migration risks such as data loss or performance degradation. Predefined strategies of the instance migrator 288 (or other components accessed by the instance migrator) automatically mitigate risks, including providing rollback mechanisms to revert to a previous state in case of anomalies. These risk mitigation technique help ensure minimal impact on service availability and data integrity throughout the migration process.

The instance migrator 288 can define a timeline for the migration process. The timeline can include various phases, such as initial data analysis, dependency mapping, pre-checks for data consistency, and incremental migration steps. Post-migration validation and performance monitoring can also be included as a phase of the migration process.

Typically, the computing environment 200 includes migration tools that can be accessed by the instance migrator 288. These migration tools can perform tasks such as data ETL (extract, transform, load), schema migration, and application reconfiguration.

For a data preparation phase, the instance migrator 288 can perform data preparation operations. That is, once the migration plan is created, the migration process can start by determining/defining tasks to be performed, as well as preparing data for migration. As part of the data preparation operations, the instance manager 288 can use data analysis tools to scan and analyze instance data to be migrated. This process can identify dependencies, constraints, and potential issues that may impact the migration process.

Dependencies refer to relationships or interdependencies between different data elements or systems within the existing database instance (including a portion for a particular tenant being migrated). Identifying dependencies helps in understanding how data entities are interconnected and ensures that all related components are migrated together to maintain data integrity. Examples of dependencies include foreign key relationships between tables and views, where a view is dependent on the database objects used to define the view.

Data constraints define rules or conditions that must be adhered to during migration to preserve data quality and integrity. Automated tools analyze these constraints, such as unique keys, foreign keys, and data validation rules, ensuring that they are respected in the target environment.

Potential issues that can be identified during data analysis include data duplication, inconsistent data formats, missing data, or outdated records. Identifying these issues early allows for proactive remediation, adjustments in the migration plan, and application of appropriate data cleansing techniques. For instance, data cleansing techniques may include methods to standardize date formats across datasets, to remove duplicate records, or to fill in missing values based on predefined rules or statistical methods. Normalization procedures can also ensure that data adheres to specified formats and guidelines, while validation checks can identify outliers or erroneous entries for further review or correction. These techniques collectively ensure that data integrity is maintained and that the migrated data meets the required quality standards for the target environment.

In a data preparation phase, the instance migrator 288 can generate a data migration plan. The data migration plan outlines the steps for the migration, such as defining specific operations to be performed, or at least defining instructions that will be provided to another component, such as an ETL tool, to execute during the migration.

During migration, the instance migrator 288 can cause various data backup operations to be performed. These operations can include capturing automated snapshots or using continuous data replication techniques that capture the state of the database at various points. Automated data synchronization or replication methods can be used to transfer data between the source and target environments. Schema migration tools can be used to analyze and modify database schemas to align with the requirements of the target instance. For example, these tools allow for detection and adjustment of schema differences. As part of the migration process, application configurations and connection strings can be updated. For example, the migration process can detect changes in database locations or configurations and automatically update application settings accordingly.

### Example 4 - Example Migration Scenarios

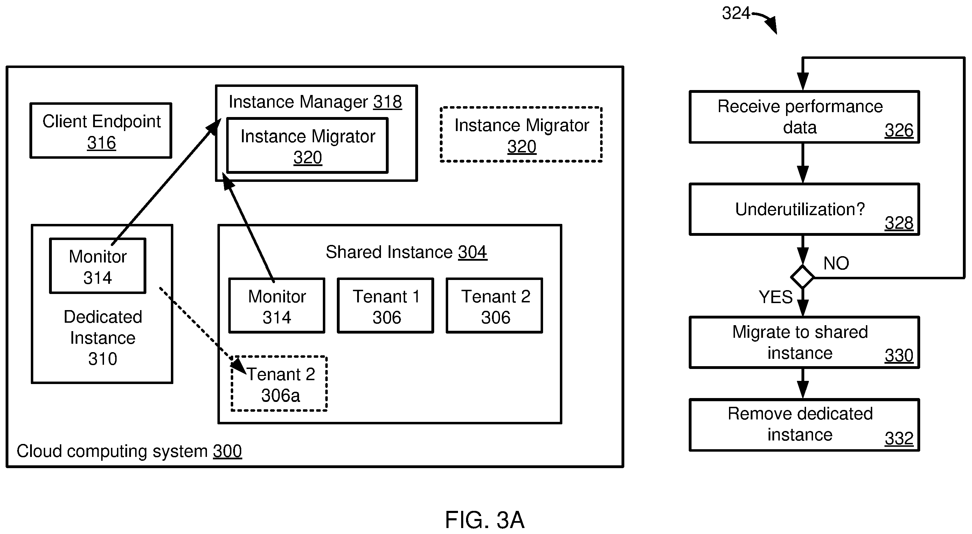

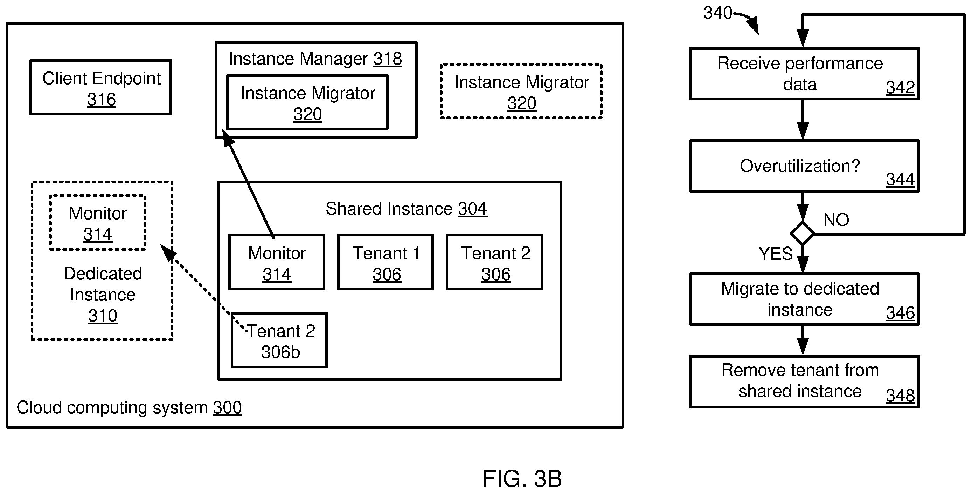

FIGS. 3A and 3B illustrate various migration scenarios that can be performed using disclosed techniques. With reference first to FIG. 3A, a cloud computing system 300 includes a shared database instance 304 having multiple tenants 306, as well as a dedicated instance 310. Both the shared database instance 304 and the dedicated database instance 310 include monitoring components 314, which provide operational information regarding the respective database instances to an instance manager 318, which can correspond to the instance manager 280 of FIG. 2. As explained in Example 3, the instance manager 318 can include functionality of an instance migrator 320, or the instance migrator can be a separate component of the cloud computing system 300.

FIG. 3A illustrates the cloud computing system 300 as having a client endpoint 316. A client endpoint 316 is where a database client, such as a client 206 (more particularly, clients of a specific entity 204) of FIG. 2, sends requests for database operations. The endpoint 316 can include information such as a DNS name, a port number, a protocol specification, and optionally other parameters, such as security settings, authentication methods, or a database identifier. As discussed, an advantage of disclosed techniques is that they can allow for seamless migration between database instances in a manner that is transparent to clients, as the same endpoint can be used by the client both before and after migration.

FIG. 3A represents a scenario where the dedicated database instance 310 is determined to be underutilized (that is, it is assigned substantially more resources than needed for the current workload of the dedicated database instance). As shown in a flowchart 324 of FIG. 3A, the instance manager 318 can receive data at 326 from the monitoring component 314 of the dedicated database instance 310. The data, such as information about computing resources used or workload information, is analyzed at 328 and a determination is made, using specified criteria, whether the dedicated database instance 310 is underutilizing the resources assigned to the dedicated database instance. If not, the process of the flowchart 324 can return to 326 as further data is received.

If it is determined at 328 that the dedicated database instance 310 is underutilized, the dedicated database instance can be migrated at 330 to become another tenant, tenant 306a, of the shared database instance 304. Once migration is complete, the dedicated database instance 310 can be removed at 332, freeing computing resources to be used for other purposes, or to be released from the cloud computing system 300 (that is, resources can be returned to a cloud service provider).

FIG. 3B represents a scenario where a shared database instance 304 is overutilized, and at least one tenant 306 is migrated to a dedicated database instance 310. In this scenario, as shown at 342 of a flowchart 340, the instance manager 318 receives operational information from the shared database instance 304. It is determined at 344 whether resources of the shared instance 304 are overutilized. Overutilization can include scenarios where a single tenant 306 consumes a disproportionate amount of resource compared with other tenants of the shared instance 304. In other cases, resource of the shared database instance 304 can be overutilized by having too many tenants 306, even if no single tenant is primarily responsible for the over utilization. If it is determined at 344 that resources of the shared database instance 304 are not overutilized, the process can return to 342, where the instance manager 318 can periodically receive updated performance data.

If it is determined at 344 that the resources of the shared instance 304 are overutilized, the dedicated database instance 310 can be created, and one of the tenants, such as tenant 306b, is moved to the dedicated instance at 346. The tenant 306b can be a tenant who is using a disproportionately large amount of the computing resources of the shared database instance 304, or it can be selected based on other criteria. For example, the instance manager 318 can determine that the resources of the shared database instance 304 are overutilized, and target resource levels to be achieved. The tenant 306b can be selected as one whose removal will free up instance resources to most closely match the target resource use level.

The tenant to be moved can be selected based on other criteria. For example, as mentioned, database instances can serve a variety of purposes, such as having separate instances for development, testing, and production use. Logic can be implemented that, for example, selects a tenant 306 corresponding to a production database to be migrated to the dedicated instance 310. As another example, the instance manager 318 can analyze schemas used by the tenants 306. If some tenants 306 share a common database schema, but some do not, a tenant with the least overlap with the other tenants can be selected to be migrated to the dedicated instance 310.

After the tenant 306b is migrated to the dedicated instance 310, the container for that tenant in the shared instance 304 can be removed.

### Example 5 - Example Operations

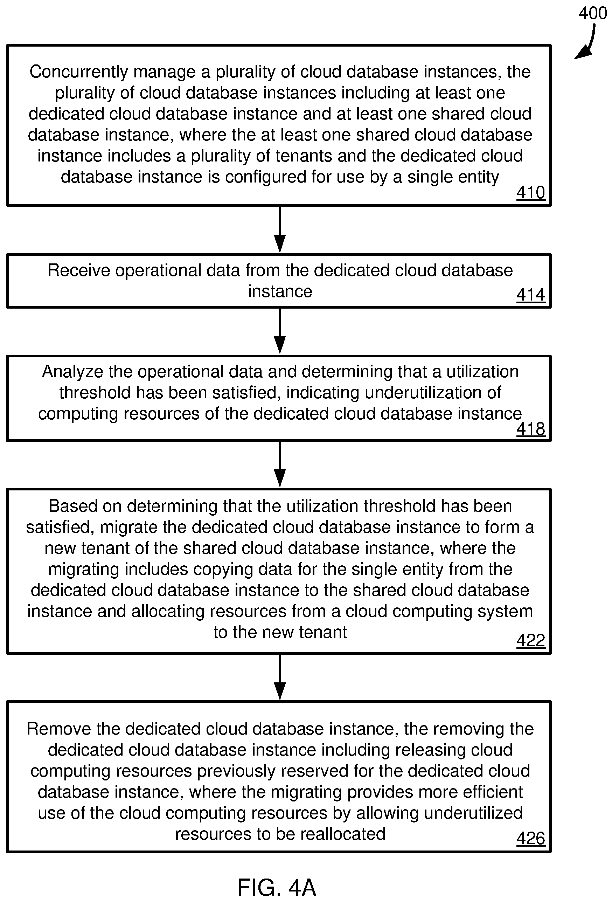

FIG. 4A provides a flowchart of a process 400 of migrating a tenant of a shared cloud database instance to a dedicated cloud database instance. At 410, a plurality of cloud database instances are concurrently managed. The plurality of cloud database instances include at least one dedicated cloud database instance and at least one shared cloud database instance. The shared cloud database instance includes a plurality of tenants and the dedicated cloud database instance is configured for use by a single entity.

The system receives operational data from the dedicated cloud database instance at 414. At 418, the system analyzes the operational data and determines that a utilization threshold has been satisfied, indicating underutilization of computing resources of the dedicated cloud database instance. Based on determining that the utilization threshold has been satisfied, at 422, the system migrates the dedicated cloud database instance to form a new tenant of the shared cloud database instance. The migrating includes copying data for the single entity from the dedicated cloud database instance to the shared cloud database instance and allocating resources from a cloud computing system to the new tenant.

At 426, the dedicated cloud database instance is removed. The removing of the dedicated cloud database instance includes releasing cloud computing resources previously reserved for the dedicated cloud database instance. The migrating provides more efficient use of the cloud computing resources by allowing underutilized resources to be reallocated.

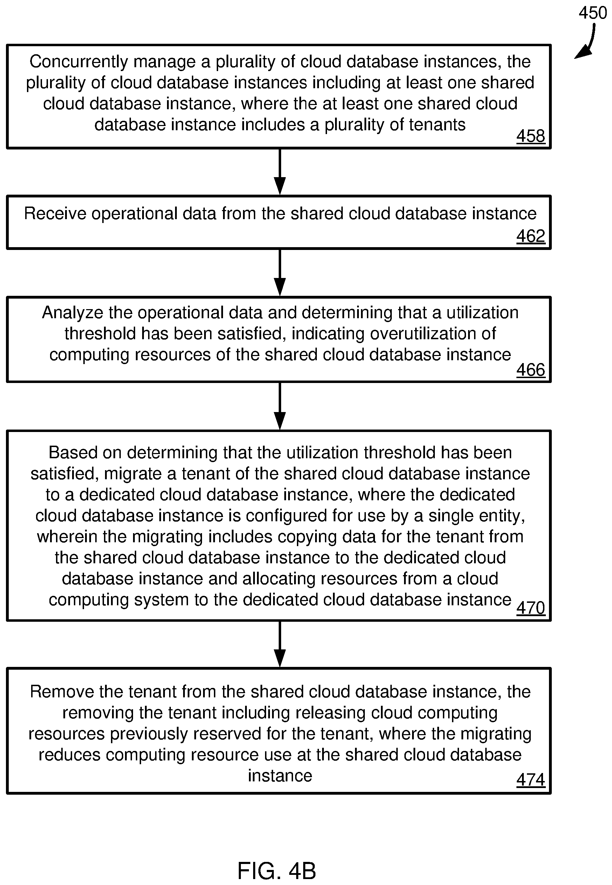

FIG. 4B provides a flowchart of a process 450 of migrating an entity of a shared cloud database instance to a dedicated cloud database instance. At 458, a plurality of cloud database instances are concurrently managed. The plurality of cloud database instances include at least one shared cloud database instance, wherein the shared cloud database instance comprises a plurality of tenants.

Operational data from the shared cloud database instance is received at 462. At 466, the operational data is analyzed and it is determined that a utilization threshold has been satisfied, indicating overutilization of computing resources of the shared cloud database instance. Based on determining that the utilization threshold has been satisfied, at 470, a tenant of the shared cloud database instance is migrated to a dedicated cloud database instance. The dedicated cloud database instance is configured for use by a single entity. The migrating includes copying data for the tenant from the shared cloud database instance to the dedicated cloud database instance and allocating resources from a cloud computing system to the dedicated cloud database instance.

At 474, the tenant is removed from the shared cloud database instance. The removing of the tenant comprises releasing cloud computing resources previously reserved for the tenant. The migrating reduces computing resource use at the shared cloud database instance.

### Example 6 - Additional Examples

Example 1 provides a computing system that performs various operations. The operations include concurrently managing a plurality of cloud database instances, which include at least one dedicated cloud database instance and at least one shared cloud database instance. The shared cloud database instance includes a plurality of tenants and the dedicated cloud database instance is configured for use by a single entity. Operational data is received from the dedicated cloud database instance. This data is analyzed to determine if a utilization threshold has been satisfied, indicating underutilization of computing resources of the dedicated cloud database instance. Based on this determination, the dedicated cloud database instance is migrated to form a new tenant of the shared cloud database instance. This migration involves copying data for the single entity from the dedicated cloud database instance to the shared cloud database instance and allocating resources from a cloud computing system to the new tenant. The dedicated cloud database instance is removed, releasing cloud computing resources previously reserved for the dedicated cloud database instance. This migration process provides more efficient use of the cloud computing resources by allowing underutilized resources to be reallocated.

Example 2 is the computing system of Example 1, where the operational data is received continuously.

Example 3 is the computing system of Example 1 or Example 2, where the operational data includes one or more performance indicators of data indicating a level of computer processor use, a level of memory use, a level of network resources use, or a level of physical storage use.

Example 4 is the computing system of Example 3, where the utilization threshold is defined with respect to at least one of the one or more performance indicators.

Example 5 is the computing system of any of Examples 1-4, where the operational data includes one or more performance indicators of a workload executed by the dedicated cloud database instance.

Example 6 is the computing system of Example 5, where the one or more performance indicators of a workload includes one or more of a number of transactions processed over a time period, a number of client connections, or information regarding times taken to perform client requests.

Example 7 is the computing system of Example 6, where the utilization threshold is defined with respect to at least one of the one or more performance indicators.

Example 8 is the computing system of any of Examples 1-6, where the operations further include storing an identifier identifying the shared cloud database instance as a shared cloud database instance and storing an identifier identifying the dedicated cloud database instance as a dedicated cloud database instance.

Example 9 is the computing system of any of Examples 1-8, where a client communicates with the dedicated cloud database instance through a defined endpoint and the client communicates with the new tenant in the shared cloud database instance using the defined endpoint.

Example 10 provides a method, implemented in a computing system, that performs various operations. The operations include concurrently managing a plurality of cloud database instances, which include at least one shared cloud database instance. The shared cloud database instance includes a plurality of tenants.

The system receives operational data from the shared cloud database instance and analyzes this data to determine if a utilization threshold has been satisfied, indicating overutilization of computing resources of the shared cloud database instance. Based on this determination, a tenant of the shared cloud database instance is migrated to a dedicated cloud database instance. The dedicated cloud database instance is configured for use by a single entity. The migration involves copying data for the tenant from the shared cloud database instance to the dedicated cloud database instance and allocating resources from a cloud computing system to the dedicated cloud database instance. The tenant is removed from the shared cloud database instance, releasing cloud computing resources previously reserved for the tenant. This migration process reduces computing resource use at the shared cloud database instance.

Example 11 is the method of Example 10, where the operational data is received continuously.

Example 12 is the method of Example 10 or Example 11, where the operational data includes one or more performance indicators of data indicating a level of computer processor use, a level of memory use, a level of network resources use, or a level of physical storage use.

Example 13 is the method of Example 12, where the utilization threshold is defined with respect to at least one of the one or more performance indicators.

Example 14 is the method of any of Examples 10-13, where the operational data comprises one or more performance indicators of a workload executed by the shared cloud database instance.

Example 15 is the method of Example 14, where the one or more performance indicators of a workload include one or more of a number of transactions processed over a time period, a number of client connections, or information regarding times taken to perform client requests.

Example 16 is the method of Example 15, where the utilization threshold is defined with respect to at least one of the one or more performance indicators.

Example 17 is the method of any of Examples 10-16, where the operations further include storing an identifier identifying the shared cloud database instance as a shared cloud database instance and storing an identifier identifying the dedicated cloud database instance as a dedicated cloud database instance.

Example 18 is the method of any of Examples 10-17, where a client communicates with the shared cloud database instance through a defined endpoint and the client communicates with the dedicated cloud database instance using the defined endpoint.

Example 19 is one or more non-transitory computer-readable storage media that include a variety of computer-executable instructions for performing various operations. The operations include concurrently managing a plurality of cloud database instances, the plurality of cloud database instances including at least one dedicated cloud database instance and at least one shared cloud database instance. The at least one shared cloud database instance includes a plurality of tenants and the dedicated cloud database instance is configured for use by a single entity;

First operational data is received from the dedicated cloud database instance. The first operational data is analyzed it is determined that a first utilization threshold has been satisfied, indicating underutilization of computing resources of the dedicated cloud database instance. Based on determining that the first utilization threshold has been satisfied, the dedicated cloud database instance is migrated to form a new tenant of the shared cloud database instance. The migrating includes copying data for the single entity from the dedicated cloud database instance to the shared cloud database instance and allocating resources from a cloud computing system to the new tenant. The dedicated cloud database instance is removed, and cloud computing resources previously reserved for the dedicated cloud database instance are released. The migrating provides more efficient use of the cloud computing resources by allowing underutilized resources to be reallocated.

The operations further include receiving second operational data from the shared cloud database instance. The second operational data is analyzed and it is determined that a second utilization threshold has been satisfied, indicating overutilization of computing resources of the shared cloud database instance. The second utilization threshold is the first utilization threshold or is different than the first utilization threshold. Based on determining that the second utilization threshold has been satisfied, a tenant of the shared cloud database instance is migrated to a dedicated cloud database instance, wherein the dedicated cloud database instance is configured for use by a single entity. The migrating includes copying data for the tenant from the shared cloud database instance to the dedicated cloud database instance and allocating resources from a cloud computing system to the dedicated cloud database instance.

The tenant is removed from the shared cloud database instance, the removing the tenant includes releasing cloud computing resources previously reserved for the tenant. The migrating reduces computing resource use at the shared cloud database instance.

Example 20 is the one or more non-transitory computer-readable storage media of claim 19, where operational data is received continuously.

### Example 7 - Computing Systems

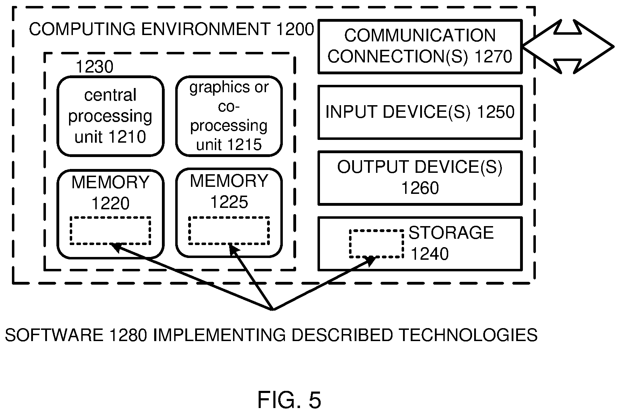

FIG. 5 depicts a generalized example of a suitable computing system 500 in which the described innovations may be implemented. The computing system 500 is not intended to suggest any limitation as to scope of use or functionality of the present disclosure, as the innovations may be implemented in diverse general-purpose or special-purpose computing systems.

With reference to FIG. 5, the computing system 500 includes one or more processing units 510, 515 and memory 520, 525. In FIG. 5, this basic configuration 530 is included within a dashed line. The processing units 510, 515 execute computer-executable instructions, such as for implementing the features described in Examples 1-6. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 5 shows a central processing unit 510 as well as a graphics processing unit or co-processing unit 515. The tangible memory 520, 525 may be volatile memory (e.g., registers, cache, RAM), non-volatile memory (e.g., ROM, EEPROM, flash memory, etc.), or some combination of the two, accessible by the processing unit(s) 510, 515. The memory 520, 525 stores software 580 implementing one or more innovations described herein, in the form of computer-executable instructions suitable for execution by the processing unit(s) 510, 515.

A computing system 500 may have additional features. For example, the computing system 500 includes storage 540, one or more input devices 550, one or more output devices 560, and one or more communication connections 570, including input devices, output devices, and communication connections for interacting with a user. An interconnection mechanism (not shown) such as a bus, controller, or network interconnects the components of the computing system 500. Typically, operating system software (not shown) provides an operating environment for other software executing in the computing system 500, and coordinates activities of the components of the computing system 500.

The tangible storage 540 may be removable or non-removable, and includes magnetic disks, magnetic tapes or cassettes, CD-ROMs, DVDs, or any other medium which can be used to store information in a non-transitory way and which can be accessed within the computing system 500. The storage 540 stores instructions for the software 580 implementing one or more innovations described herein.

The input device(s) 550 may be a touch input device such as a keyboard, mouse, pen, or trackball, a voice input device, a scanning device, or another device that provides input to the computing system 500. The output device(s) 560 may be a display, printer, speaker, CD-writer, or another device that provides output from the computing system 500.

The communication connection(s) 570 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 8 - Cloud Computing Environment

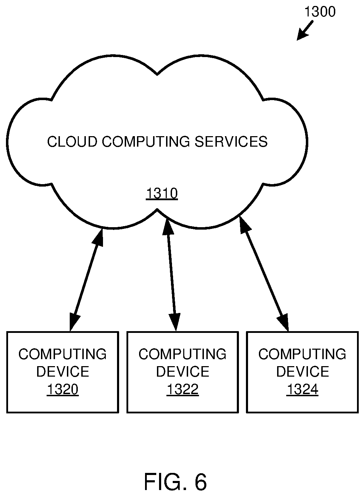

FIG. 6 depicts an example cloud computing environment 600 in which the described technologies can be implemented. The cloud computing environment 600 comprises cloud computing services 610. The cloud computing services 610 can comprise various types of cloud computing resources, such as computer servers, data storage repositories, networking resources, etc. The cloud computing services 610 can be centrally located (e.g., provided by a data center of a business or organization) or distributed (e.g., provided by various computing resources located at different locations, such as different data centers and/or located in different cities or countries).
The cloud computing services 610 are utilized by various types of computing devices (e.g., client computing devices), such as computing devices 620, 622, and 624. For example, the computing devices (e.g., 620, 622, and 624) can be computers (e.g., desktop or laptop computers), mobile devices (e.g., tablet computers or smart phones), or other types of computing devices. For example, the computing devices (e.g., 620, 622, and 624) can utilize the cloud computing services 610 to perform computing operations (e.g., data processing, data storage, and the like).

### Example 9 - Implementations

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to FIG. 5, computer-readable storage media include memory 520 and 525, and storage 540. The term computer-readable storage media does not include signals and carrier waves. In addition, the term computer-readable storage media does not include communication connections (e.g., 570).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network, or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Python, Ruby, ABAP, SQL, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one hardware processor;
at least one memory coupled to the at least one hardware processor; and
one or more computer-readable storage media storing computer-executable instructions that, when executed by the computing system, cause the computing system to perform operations comprising:
concurrently managing a plurality of cloud database instances, the plurality of cloud database instances comprising at least one dedicated cloud database instance and at least one shared cloud database instance, wherein the at least one shared cloud database instance comprises a plurality of tenants and the dedicated cloud database instance is configured for use by a single entity;
receiving operational data from the dedicated cloud database instance;
analyzing the operational data and determining that a utilization threshold has been satisfied, indicating underutilization of computing resources of the dedicated cloud database instance;
based on determining that the utilization threshold has been satisfied, migrating the dedicated cloud database instance to form a new tenant of the shared cloud database instance, wherein the migrating comprises copying data for the single entity from the dedicated cloud database instance to the shared cloud database instance and allocating resources from a cloud computing system to the new tenant; and
removing the dedicated cloud database instance, the removing the dedicated cloud database instance comprising releasing cloud computing resources previously reserved for the dedicated cloud database instance, wherein the migrating provides more efficient use of the cloud computing resources by allowing underutilized resources to be reallocated.

2. The computing system of claim 1, wherein the operational data is received continuously.

3. The computing system of claim 1 or 2, wherein the operational data comprises one or more performance indicators of data indicating a level of computer processor use, a level of memory use, a level of network resources use, or a level of physical storage use;
wherein, optionally, the utilization threshold is defined with respect to at least one of the one or more performance indicators.

4. The computing system of any one of claims 1 to 3, wherein the operational data comprises one or more performance indicators of a workload executed by the dedicated cloud database instance.

5. The computing system of claim 4, wherein the one or more performance indicators of a workload comprise one or more of a number of transactions processed over a time period, a number of client connections, or information regarding times taken to perform client requests;
wherein, optionally, the utilization threshold is defined with respect to at least one of the one or more performance indicators.

6. The computing system of any one of claims 1 to 5, the operations further comprising:
storing an identifier identifying the shared cloud database instance as a shared cloud database instance and storing an identifier identifying the dedicated cloud database instance as a dedicated cloud database instance.

7. The computing system of any one of claims 1 to 6, wherein a client communicates with the dedicated cloud database instance through a defined endpoint and the client communicates with the new tenant in the shared cloud database instance using the defined endpoint.

8. A method, implemented in a computing system comprising at least one hardware processor and at least one memory coupled to the at least one hardware processor, the method comprising:
concurrently managing a plurality of cloud database instances, the plurality of cloud database instances comprising at least one shared cloud database instance, wherein the at least one shared cloud database instance comprises a plurality of tenants;
receiving operational data from the shared cloud database instance;
analyzing the operational data and determining that a utilization threshold has been satisfied, indicating overutilization of computing resources of the shared cloud database instance;
based on determining that the utilization threshold has been satisfied, migrating a tenant of the shared cloud database instance to a dedicated cloud database instance, wherein the dedicated cloud database instance is configured for use by a single entity, wherein the migrating comprises copying data for the tenant from the shared cloud database instance to the dedicated cloud database instance and allocating resources from a cloud computing system to the dedicated cloud database instance; and
removing the tenant from the shared cloud database instance, the removing the tenant comprising releasing cloud computing resources previously reserved for the tenant, wherein the migrating reduces computing resource use at the shared cloud database instance.

9. The method of claim 8, wherein the operational data is received continuously.

10. The method of claim 8 or 9, wherein the operational data comprises one or more performance indicators of data indicating a level of computer processor use, a level of memory use, a level of network resources use, or a level of physical storage use;
wherein, optionally, the utilization threshold is defined with respect to at least one of the one or more performance indicators.

11. The method of any one of claims 8 to 10, wherein the operational data comprises one or more performance indicators of a workload executed by the shared cloud database instance.

12. The method of claim 11, wherein the one or more performance indicators of a workload comprise one or more of a number of transactions processed over a time period, a number of client connections, or information regarding times taken to perform client requests;
wherein, optionally, the utilization threshold is defined with respect to at least one of the one or more performance indicators.

13. The method of any one of claims 8 to 12, the operations further comprising:
storing an identifier identifying the shared cloud database instance as a shared cloud database instance and storing an identifier identifying the dedicated cloud database instance as a dedicated cloud database instance; and/or
wherein a client communicates with the shared cloud database instance through a defined endpoint and the client communicates with the dedicated cloud database instance using the defined endpoint.

14. One or more non-transitory computer-readable storage media comprising:
computer-executable instructions that, when executed by a computing system comprising at least one hardware processor and at least one memory coupled to the at least one hardware processor, cause the computing system to concurrently manage a plurality of cloud database instances, the plurality of cloud database instances comprising at least one dedicated cloud database instance and at least one shared cloud database instance, wherein the at least one shared cloud database instance comprises a plurality of tenants and the dedicated cloud database instance is configured for use by a single entity;
computer-executable instructions that, when executed by the computing system, cause the computing system to receive first operational data from the dedicated cloud database instance;
computer-executable instructions that, when executed by the computing system, cause the computing system to analyze the first operational data and determine that a first utilization threshold has been satisfied, indicating underutilization of computing resources of the dedicated cloud database instance;
computer-executable instructions that, when executed by the computing system, cause the computing system to, based on determining that the first utilization threshold has been satisfied, migrate the dedicated cloud database instance to form a new tenant of the shared cloud database instance, wherein the migrating comprises copying data for the single entity from the dedicated cloud database instance to the shared cloud database instance and allocating resources from a cloud computing system to the new tenant; and
computer-executable instructions that, when executed by the computing system, cause the computing system to remove the dedicated cloud database instance, the removing the dedicated cloud database instance comprising releasing cloud computing resources previously reserved for the dedicated cloud database instance, wherein the migrating provides more efficient use of the cloud computing resources by allowing underutilized resources to be reallocated;
computer-executable instructions that, when executed by the computing system, cause the computing system to receive second operational data from the shared cloud database instance;
computer-executable instructions that, when executed by the computing system, cause the computing system to analyze the second operational data and determine that a second utilization threshold has been satisfied, indicating overutilization of computing resources of the shared cloud database instance, the second utilization threshold is the first utilization threshold or is different than the first utilization threshold;
computer-executable instructions that, when executed by the computing system, cause the computing system to, based on determining that the second utilization threshold has been satisfied, migrate a tenant of the shared cloud database instance to a dedicated cloud database instance, wherein the dedicated cloud database instance is configured for use by a single entity, wherein the migrating comprises copying data for the tenant from the shared cloud database instance to the dedicated cloud database instance and allocating resources from a cloud computing system to the dedicated cloud database instance; and
computer-executable instructions that, when executed by the computing system, cause the computing system to remove the tenant from the shared cloud database instance, the removing the tenant comprising releasing cloud computing resources previously reserved for the tenant, wherein the migrating reduces computing resource use at the shared cloud database instance.

15. The one or more non-transitory computer-readable storage media of claim 14, wherein the operational data is received continuously.
